# FASCICULE DE BREVET EUROPEEN

(11) **EP 3 781 825 B1**
(45) Date de publication et mention de la délivrance du brevet: **21.08.2024**
(21) Numéro de dépôt: 19718356.9
(22) Date de dépôt: 17.04.2019
(51) Int. Cl.: F16B 19/10, B25B 21/00, B25B 31/00

(54) **FIXATION TEMPORAIRE DE STRUCTURES**
PROVISORISCHES BEFESTIGUNGSELEMENT FÜR STRUKTUREN
TEMPORARY FASTENER FOR STRUCTURES

(30) Priorité: 17.04.2018 FR 1853326
(43) Date de publication de la demande: 24.02.2021
(73) Titulaire: Lisi Aerospace, 75012 Paris (FR)
(72) Inventeur: BRACHET, Julien, 18500 MEHUN SUR YEVRE (FR)
(74) Mandataire: Lavoix
(86) Numéro de dépôt international: PCT/EP2019/059895
(87) Numéro de publication internationale: WO 2019/201980

(56) Documents cités:
- WO-A1-2017/013612
- FR-A1- 2 676 258
- FR-A1- 3 014 969
- US-A- 3 162 072

## Description

La présente invention concerne une fixation pour l'assemblage temporaire d'au moins deux structures préalablement percées, du type comportant : un corps creux, s'étendant selon un axe principal, une première extrémité dudit corps comprenant une face d'appui sensiblement perpendiculaire audit axe principal ; une pluralité de pinces élastiques mobiles par rapport au corps et s'étendant sensiblement parallèlement à l'axe principal, une première extrémité de chaque pince élastique comprenant un bec d'accrochage, lesdits becs d'accrochage formant saillie par rapport à la face d'appui du corps ; un écarteur s'étendant selon l'axe principal, une première extrémité dudit écarteur formant saillie par rapport à la face d'appui du corps, la pluralité de pinces élastiques étant disposée autour de ladite première extrémité, une seconde extrémité dudit écarteur étant disposée à l'intérieur du corps ; un élément de liaison mobile par rapport au corps et s'étendant selon l'axe principal à l'intérieur dudit corps, une première extrémité dudit élément de liaison étant solidaire d'une seconde extrémité de chaque pince élastique ; et-un élément d'actionnement relié à une seconde extrémité de l'élément de liaison par un mécanisme de type filetage/taraudage.

L'invention s'applique particulièrement aux fixations temporaires de type agrafes d'épinglage.

Dans l'industrie aéronautique, avant de réaliser l'assemblage définitif de deux éléments de structure, il est connu de procéder à un assemblage provisoire desdits éléments au moyen de fixations temporaires insérées dans des trous traversants. De telles fixations temporaires sont notamment décrites dans les documents EP0336808 et FR3014969.

Dans des dispositifs similaires, il est connu de relier le corps creux et les pinces élastiques au moyen d'une pièce d'assemblage passant entre lesdites pinces. Une telle pièce d'assemblage ayant notamment pour fonction de bloquer en rotation les pinces par rapport au corps, son épaisseur conduit à augmenter l'espace entre les pinces, donc à limiter l'épaisseur desdites pinces.

Le document EP0336808 décrit notamment une fixation temporaire comprenant deux pinces élastiques. Cependant, il est avantageux d'augmenter le nombre de pinces élastiques afin d'augmenter la surface d'accroche avec les structures à assembler.

La présente invention a pour but de proposer un mécanisme de liaison entre le corps creux et les pinces élastiques permettant de conserver une épaisseur maximale desdites pinces, afin notamment de prévoir un nombre de pinces supérieur à deux.

A cet effet, l'invention a pour objet une fixation du type précité, dans laquelle l'élément de liaison est traversé par un orifice latéral sensiblement disposé selon une direction transversale perpendiculaire à l'axe principal, ledit orifice latéral s'étendant axialement entre une première et une seconde extrémités fermées ; la fixation comporte en outre une butée s'étendant selon la direction transversale et solidaire de l'écarteur, ladite butée étant disposée dans l'orifice latéral de l'élément de liaison, de sorte à coulisser entre les première et seconde extrémités axiales dudit orifice latéral.

Suivant d'autres aspects avantageux de l'invention, la fixation comporte l'une ou plusieurs des caractéristiques suivantes, prises isolément ou suivant toutes les combinaisons techniquement possibles :
- la fixation comprend en outre un ressort de compression disposé à l'intérieur du corps autour de l'élément de liaison, ledit ressort étant apte à se comprimer selon l'axe principal, une extrémité dudit ressort étant apte à entrer en contact avec la butée de part et d'autre dudit élément de liaison ;
- la seconde extrémité de l'élément de liaison comporte un filetage et l'élément d'actionnement comporte un taraudage coopérant avec ledit filetage ;
- la seconde extrémité de l'écarteur est traversée par un trou transversal disposé selon la direction transversale, et la butée est une goupille assemblée audit trou transversal ;
- la pluralité de pinces élastiques comprend au moins trois pinces élastiques et préférentiellement au moins quatre pinces élastiques ;
- la butée est fixe en translation selon l'axe principal par rapport au corps ;
- la fixation comprend en outre un manchon disposé à l'intérieur du corps autour de l'élément de liaison, ledit manchon étant fixe par rapport au corps, une première extrémité dudit manchon comprenant deux encoches s'étendant axialement et situées en vis-à-vis l'une de l'autre par rapport à l'axe principal, la butée traversant lesdites encoches et étant apte à coulisser dans lesdites encoches selon l'axe principal ;
- le ressort de compression est disposé autour du manchon ;
- une première extrémité de l'élément d'actionnement est disposée à l'intérieur du corps et une seconde extrémité dudit élément d'actionnement forme une saillie par rapport à une seconde extrémité dudit corps ;
- la seconde extrémité de l'élément d'actionnement comporte un élément d'accouplement avec un outil d'installation rotatif ; et
- la seconde extrémité de l'élément d'actionnement comporte en outre une collerette formant une saillie radiale externe.

L'invention se rapporte en outre à un assemblage comprenant : des structures à assembler, comprenant une première et une seconde faces opposées, ainsi qu'un alésage débouchant sur chacune desdites première et seconde faces ; et une fixation telle que décrite ci-dessus, la pluralité de pinces élastiques étant disposée dans l'alésage, la face d'appui du corps et les becs d'accrochage venant au contact respectivement de la première face et de la seconde face, le ressort exerçant une tension tendant à rapprocher ladite face d'appui et lesdits becs d'accrochage selon l'axe principal.

L'invention sera mieux comprise à la lecture de la description qui va suivre, donnée à titre d'exemple non limitatif et faite en se référant aux dessins sur lesquels :
- la figure 1 est une vue en perspective d'une fixation selon un premier mode de réalisation de l'invention, dans une première configuration ;
- la figure 2 est une vue en coupe de la fixation de la figure 1, dans la première configuration ;
- la figure 3 est une vue en coupe d'un assemblage comprenant la fixation de la figure 1, dans une deuxième configuration ;
- la figure 4 est une vue en perspective d'éléments pris isolément de la fixation de la figure 1, dans une troisième configuration ;
- la figure 5 est une vue en perspective d'une fixation selon un deuxième mode de réalisation de l'invention, dans une première configuration ;
- la figure 6 est une vue en coupe de la fixation de la figure 5, dans la première configuration ;
- la figure 7 est une vue en coupe d'un assemblage comprenant la fixation de la figure 5, dans une deuxième configuration ;
- la figure 8 est une vue en perspective éclatée d'éléments pris isolément de la fixation de la figure 5, dans ladite deuxième configuration ; et
- la figure 9 est une vue en coupe d'un ensemble comprenant la fixation des figures 1 à 3 et un nez de pose pour l'installation de ladite fixation.

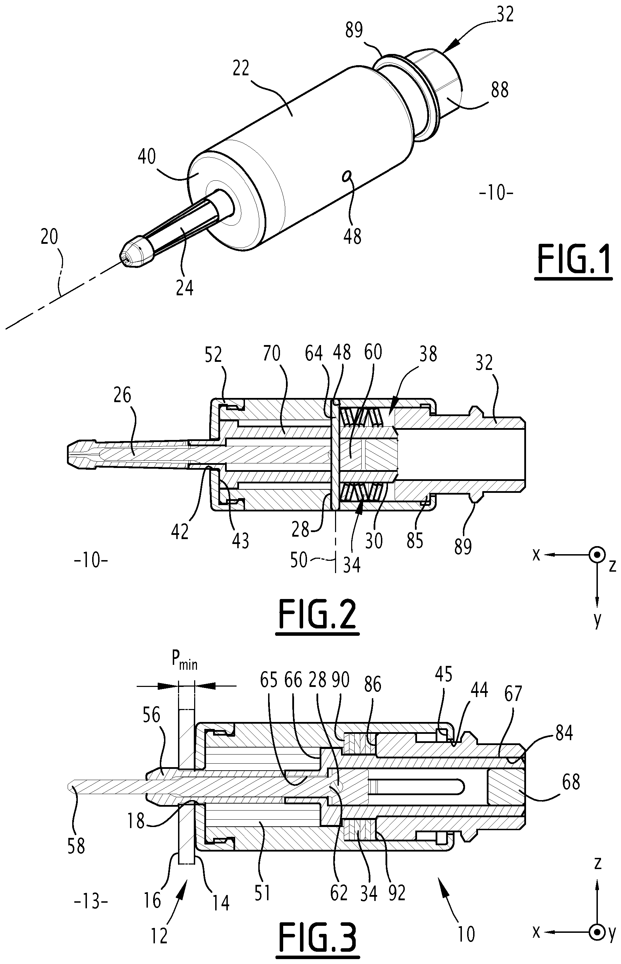

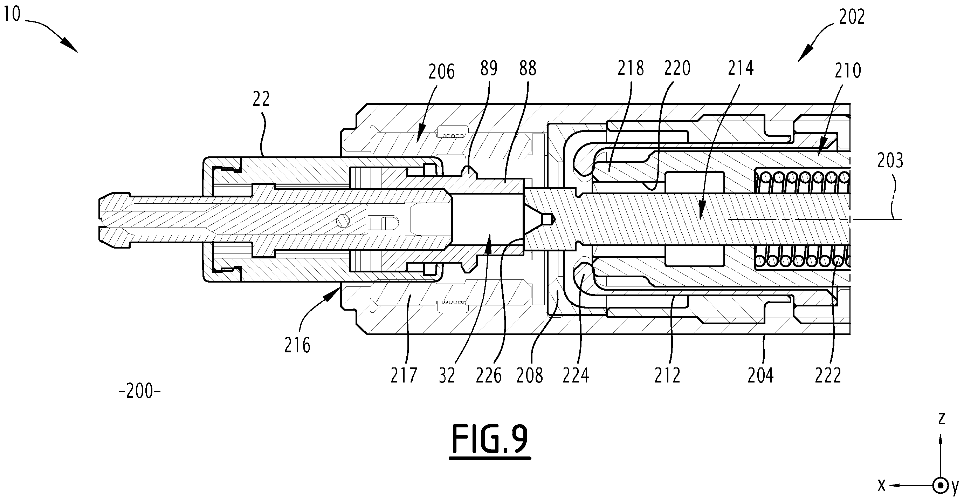

Les figures 1-3 et 5-7 montrent respectivement une fixation 10 selon un premier mode de réalisation de l'invention et une fixation 110 selon un deuxième mode de réalisation de l'invention. La figure 9 montre un ensemble 200 comprenant la fixation 10 des figures 1-3 et un nez de pose 202 pour l'installation de ladite fixation 10.

Dans la description qui suit, les fixations 10 et 110 seront décrites simultanément, les éléments semblables des deux fixations étant désignés par les mêmes numéros de référence.

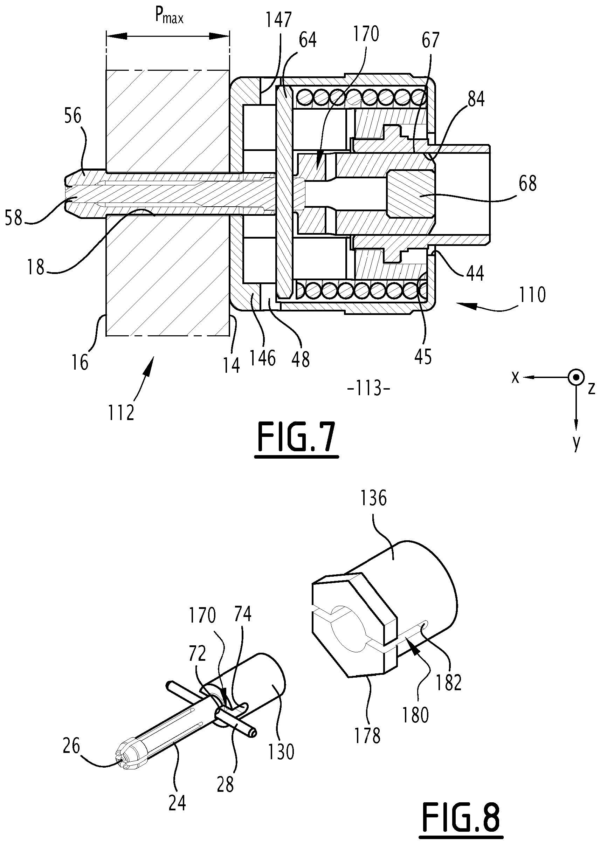

La fixation 10, 110 est apte à assembler temporairement au moins deux structures 12, 112, visibles aux figures 3 et 7, pour former un assemblage 13, 113. A des fins de simplification, les structures 12, 112 sont représentées de manière monobloc, définissant deux faces 14, 16 opposées. Un alésage 18 traverse les structures 12, 112 depuis la première 14 jusqu'à la deuxième 16 face.

Comme il sera précisé par la suite, les structures 12 de la figure 3 forment une épaisseur Pₘᵢₙ correspondant à l'épaisseur minimale des structures pouvant être assemblées par la fixation 10. Au contraire, les structures 112 de la figure 7 forment une épaisseur Pₘₐₓ correspondant à l'épaisseur maximale des structures pouvant être assemblées par la fixation 110. L'épaisseur correspond à la distance entre les première 14 et deuxième 16 face.

La fixation 10, 110 s'étend selon un axe principal 20 et comporte : un corps 22, 122 ; des pinces élastiques 24 ; un écarteur 26 ; une goupille 28 ; un élément de liaison 30, 130 ; un élément d'actionnement 32, 132 ; et un ressort 34, 134. La fixation 110 selon le deuxième mode de réalisation comporte en outre un manchon 136.

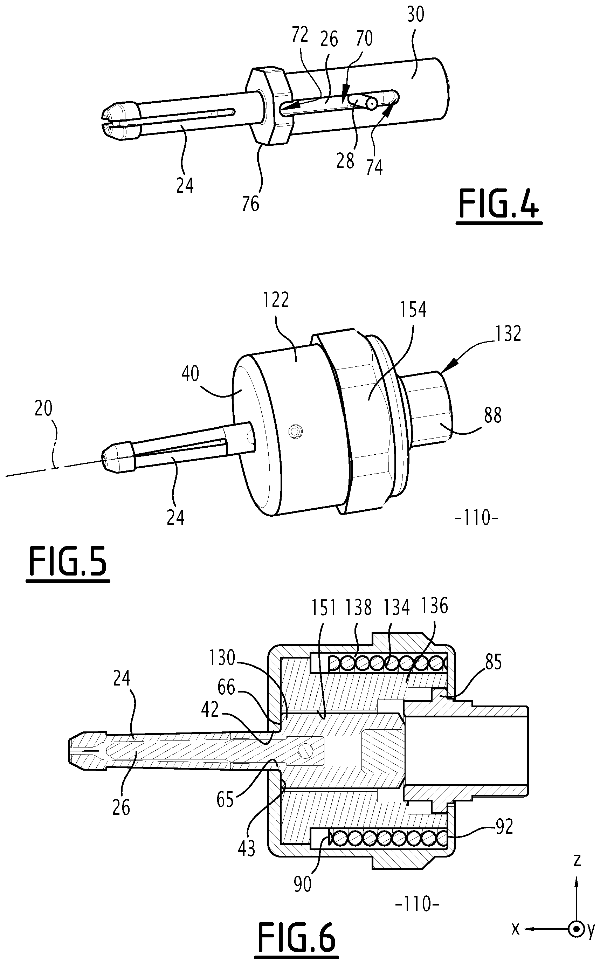

La figure 4 montre les pinces élastiques 24, l'écarteur 26, la goupille 28 et l'élément de liaison 30 de la fixation 10. La figure 8 montre en perspective éclatée, d'une part les pinces élastiques 24, l'écarteur 26, la goupille 28 et l'élément de liaison 130, et d'autre part le manchon 136, de la fixation 110.

Comme il sera précisé par la suite, le deuxième mode de réalisation des figures 5 à 8 est particulièrement conçu pour présenter un faible encombrement selon l'axe principal 20.

Le corps 22, 122 est creux, définissant une cavité interne 38, 138 de forme sensiblement cylindrique. Une première extrémité axiale du corps 22, 122, dite extrémité avant, comprend une face d'appui 40 sensiblement perpendiculaire à l'axe principal 20. Ladite face d'appui 40 est susceptible de venir au contact de la première face 14 des structures 12, 112. La face d'appui 40 comporte une première ouverture centrale 42 communiquant avec la cavité interne 38, 138.

Une deuxième extrémité axiale du corps 22, 122, dite extrémité arrière, comporte une seconde ouverture centrale 44 communiquant avec la cavité interne 38, 138. De préférence, la seconde ouverture centrale 44 a un diamètre supérieur à celui de la première ouverture centrale 42.

Les première 42 et seconde 44 ouvertures centrales s'ouvrent sur des parois 43, 45, dites respectivement paroi avant et paroi arrière, de la cavité interne 38, 138. Chacune des parois avant 43 et arrière 45 est sensiblement perpendiculaire à l'axe principal 20.

Dans le deuxième mode de réalisation des figures 5 à 8, le corps 122 comporte une couronne interne 146 formant saillie axiale par rapport à la paroi avant 43. Une surface arrière 147 de ladite couronne interne, orientée vers l'extrémité arrière du corps 122, est apte à former une butée axiale comme il sera décrit par la suite.

Le corps 22, 122 comporte en outre deux ouvertures latérales 48, de forme sensiblement circulaire. Les ouvertures latérales 48 communiquent avec la cavité interne 38, 138 et sont situées en vis-à-vis par rapport à l'axe principal 20. Lesdites ouvertures latérales 48 définissent un axe transversal 50 perpendiculaire audit axe principal 20. Dans la suite de la description, on considère une base orthonormée (X, Y, Z), les directions longitudinale X et transversale Y représentant les directions respectives de l'axe principal 20 et de l'axe transversal 50.

A proximité de la paroi avant 43, la cavité interne 38, 138 comporte des éléments de blocage en rotation, tels que des méplats 51, 151 parallèles à l'axe principal 20 et disposés autour dudit axe. Dans le deuxième mode de réalisation des figures 5 à 8, les méplats 151 sont ménagés sur la couronne interne 146.

Dans le deuxième mode de réalisation des figures 5 à 8, le corps 122 de la fixation 110 est formé d'une pièce. Dans le premier mode de réalisation des figures 1 à 4, le corps 22 de la fixation 10 est formé d'une partie principale, comprenant notamment l'extrémité arrière, et d'un capuchon 52 comprenant l'extrémité avant et la face d'appui 40. La partie principale et le capuchon 52 sont fixés l'un à l'autre.

Dans le deuxième mode de réalisation des figures 5 à 8, une surface externe du corps 122 comporte des éléments de blocage en rotation, tels que des méplats 154 parallèles à l'axe principal 20 et disposés autour dudit axe. Les méplats 154 sont notamment aptes à bloquer en rotation le corps 122 dans un nez de pose (non représenté) analogue au nez de pose 202 de la figure 9.

Les pinces élastiques 24 sont destinées à traverser l'alésage 18 des structures 12, 112. Les pinces élastiques 24 sont sensiblement identiques, au moins au nombre de deux, et plus préférentiellement au moins au nombre de trois ou quatre. Dans les premier et deuxième modes de réalisation représentés, les pinces élastiques 24 sont au nombre de quatre.

Les pinces élastiques 24 s'étendent sensiblement parallèlement à l'axe principal 20 et sont disposées sensiblement régulièrement autour dudit axe.

Une première extrémité de chaque pince élastique 24 comprend un bec d'accrochage 56, susceptible de venir au contact de la deuxième face 16 des structures 12, 112.

Les pinces élastiques 24 traversent la première ouverture centrale 42 du corps 22, 122, les becs d'accrochage 56 formant saillie par rapport à la face d'appui 40. Comme il sera décrit ci-après, les pinces élastiques 24 sont mobiles en translation axiale par rapport au corps 22, 122 et bloquées en rotation par rapport audit corps.

L'écarteur 26 s'étend selon l'axe principal 20 et traverse la première ouverture centrale 42 du corps 22, 122. Comme il sera décrit ci-après, dans le premier mode de réalisation des figures 1 à 4, l'écarteur 26 est fixe par rapport au corps 22. En revanche, dans le deuxième mode de réalisation des figures 5 à 8, l'écarteur 26 est mobile en translation axiale par rapport au corps 122.

Une première extrémité 58 de l'écarteur 26, dite extrémité avant, forme une saillie axiale par rapport à la face d'appui 40 du corps 22, 122, les pinces élastiques 24 étant disposées autour de ladite extrémité avant 58. Une seconde extrémité 60 de l'écarteur 26 est disposée dans la cavité interne 38, 138 du corps 22, 122. Ladite seconde extrémité 60 de l'écarteur 26 est traversée par un trou transversal 62 disposé selon la direction transversale Y.

La goupille 28 s'étend selon la direction transversale Y et traverse le trou transversal 62 de l'écarteur 26. Dans le premier mode de réalisation des figures 1 à 4, les extrémités 64 de la goupille 28 sont insérées dans les ouvertures latérales 48 du corps 22, solidarisant ladite goupille 28 et l'écarteur 26 au corps 22 de la fixation 10. La goupille 28 s'étend ainsi selon l'axe transversal 50.

En revanche, dans le deuxième mode de réalisation des figures 5 à 8, les extrémités 64 de la goupille 28 sont disposées dans la cavité interne 138 du corps 122 de la fixation 110, en retrait par rapport aux ouvertures latérales 48 dudit corps 122. Comme il sera décrit ci-après, l'écarteur 26 et la goupille 28 sont mobiles en translation selon X par rapport au corps 122 de la fixation 110, et bloqués en rotation par rapport audit corps.

L'élément de liaison 30, 130 s'étend selon l'axe principal 20 et est au moins partiellement disposé à l'intérieur de la cavité interne 38, 138 du corps 22, 122. Une première extrémité dudit élément de liaison 30, 130 est solidaire d'une seconde extrémité, opposée au bec d'accrochage 56, de chaque pince élastique 24.

L'élément de liaison 30, 130, ci-après dénommé tige creuse, a une forme tubulaire. La première extrémité de ladite tige creuse 30, 130 comporte un orifice axial 65 autour duquel sont disposées les pinces élastiques 24. Ladite première extrémité de la tige creuse 30, 130 comporte en outre un épaulement 66 formant butée axiale avec la paroi avant 43 de la cavité interne 38, 138, de sorte à maintenir ledit épaulement 66 à l'intérieur de ladite cavité interne.

Une seconde extrémité de ladite tige creuse 30, 130, orientée vers l'extrémité arrière du corps 22, 122, a une surface externe sensiblement cylindrique de révolution et comporte un filetage 67. Dans les premier et deuxième modes de réalisation représentés, la seconde extrémité de ladite tige creuse 30, 130 est fermée par un bouchon 68.

La tige creuse 30, 130 comporte deux fentes latérales 70, 170, situées en vis-à-vis par rapport à l'axe principal 20 et s'étendant selon X entre une première 72 et une seconde 74 extrémités fermées. Les première 72 et seconde 74 extrémités des fentes latérales 70, 170 sont orientées respectivement vers les pinces élastiques 24 et vers le filetage 67.

L'écarteur 26 traverse l'orifice axial 65 de la tige creuse 30, 130, la seconde extrémité 60 dudit écarteur étant disposée à l'intérieur de ladite tige creuse. La goupille 28 s'étend transversalement dans les fentes latérales 70, 170, de sorte à pouvoir coulisser selon X entre les première 72 et seconde 74 extrémités desdites fentes latérales.

Dans le premier mode de réalisation des figures 1 à 4, la goupille 28 étant fixe par rapport au corps 22, l'ensemble pinces élastiques 24 / tige creuse 30 de la fixation 10 est ainsi bloqué en rotation autour de l'axe principal 20 par rapport audit corps 22.

Dans le premier mode de réalisation des figures 1 à 4, à proximité de la première extrémité de la tige creuse 30 de la fixation 10, une surface externe de ladite tige creuse comporte en outre des méplats 76 coopérant avec les méplats 51 de la cavité interne 38. Les méplats 51 et 76 forment un moyen supplémentaire de blocage en rotation de la tige creuse 30 dans le corps 22, permettant d'éviter qu'un couple de torsion ne s'exerce sur la goupille durant l'utilisation de la fixation 10.

Dans le deuxième mode de réalisation des figures 5 à 8, le manchon 136 de la fixation 110 s'étend selon l'axe principal 20, entre une première et une seconde extrémités ouvertes. Le manchon 136 est entièrement contenu à l'intérieur de la cavité interne 138 du corps 122 et bloqué en translation axiale à l'intérieur de ladite cavité interne. Les première et seconde extrémités du manchon sont respectivement orientées vers les extrémités avant et arrière du corps 122.

A proximité de la première extrémité du manchon 136, une surface externe dudit manchon comporte des méplats 178 coopérant avec les méplats 151 de la cavité interne 138, de sorte à bloquer en rotation le manchon 136 dans le corps 122.

La tige creuse 130 est disposée à l'intérieur du manchon 136, formant saillie par rapport à la première extrémité dudit manchon.

Le manchon 136 comporte deux encoches latérales 180, situées en vis-à-vis par rapport à l'axe principal 20 et s'étendant selon X. Une première extrémité desdites encoches 180 est ouverte sur la première extrémité du manchon 136. Une seconde extrémité 182 desdites encoches 180 est fermée.

La goupille 28 s'étend transversalement dans les encoches latérales 180, de sorte à pouvoir coulisser selon X entre les première et seconde 182 extrémités desdites encoches latérales 180. Par l'intermédiaire du manchon 136, la goupille 28, l'écarteur 26 et l'ensemble pinces élastiques 24 / tige creuse 130 sont ainsi bloqués en rotation autour de l'axe principal 20 par rapport au corps 122 de la fixation 110.

L'élément d'actionnement 32, 132, ci-après dénommé tirant, a une forme tubulaire s'étendant selon l'axe principal 20. Le tirant 32, 132 traverse la seconde ouverture centrale 44 du corps 22, 122. Une première extrémité dudit tirant 32, 132, disposée dans la cavité interne 38, 138 du corps 22, 122, comporte un taraudage 84 apte à coopérer avec le filetage 67 de la tige creuse 30, 130. Ladite première extrémité dudit tirant 32, 132 comporte en outre un épaulement 85 formant butée axiale avec la paroi arrière 45 de la cavité interne 38, 138, de sorte à maintenir ledit épaulement 85 à l'intérieur de ladite cavité interne.

Dans le premier mode de réalisation des figures 1 à 4, la première extrémité du tirant 32 aboutit sur une surface 86 sensiblement plane et perpendiculaire à l'axe principal 20, dite face avant du tirant 32.

Une seconde extrémité du tirant 32, 132, dite extrémité arrière, forme saillie à l'extérieur du corps 22, 122. Ladite extrémité arrière comporte une surface latérale 88 d'assemblage avec un outil de pose tel que le nez de pose 202 de la figure 9, qui sera décrit ultérieurement. La surface latérale d'assemblage 88 est notamment apte à bloquer en rotation le tirant 32, 132 par rapport audit outil de pose. Dans l'exemple représenté, la surface latérale d'assemblage 88 est formée de six pans.

Dans le premier mode de réalisation des figures 1 à 4, la seconde extrémité du tirant 32 comporte en outre une collerette 89, ou épaulement, adjacente à la surface latérale d'assemblage 88 et formant une saillie radiale par rapport à ladite surface latérale d'assemblage. Dans l'exemple représenté, la collerette 89 est d'une pièce avec le reste du tirant 32. En variante non représentée, la collerette peut être une pièce rapportée.

Le ressort 34, 134 s'étend selon l'axe principal 20, entre une première 90 et une seconde 92 extrémités. Ledit ressort 34, 134 est entièrement contenu à l'intérieur de la cavité interne 38, 138 du corps 22, 122. Le ressort 34, 134 est apte à être comprimé selon l'axe principal 20.

Dans le premier mode de réalisation des figures 1 à 4, le ressort 34 de la fixation 10 est formé par un empilement de rondelles élastiques, disposées autour de la tige creuse 30. Le ressort 34 est contenu axialement entre la goupille 28, solidaire du corps 22, et la face avant 86 du tirant 32.

Dans le deuxième mode de réalisation des figures 5 à 8, le ressort 134 de la fixation 110 est un ressort hélicoïdal, disposé autour du manchon 136. La première extrémité 90 du ressort 134 est en contact avec les extrémités 64 de la goupille 28. La seconde extrémité 92 dudit ressort 134 vient en butée axiale contre la paroi arrière 45 de la cavité interne 38, 138, autour de la seconde ouverture centrale 44. Le ressort 134 exerce ainsi sur la goupille 28 un effort selon la direction X, orienté vers l'extrémité avant du corps 122.

L'ensemble 200 de la figure 9 représente la fixation 10 du premier mode de réalisation, assemblée à un nez de pose 202 selon une étape d'un procédé d'installation de ladite fixation. Un tel procédé sera décrit ultérieurement.

Le nez de pose 202 est adapté à l'assemblage de la fixation 10 avec au moins deux structures préalablement percées. D'une manière générale, le nez de pose 202 comporte : un dispositif de blocage en rotation du corps 22 ; un outil d'installation rotatif comportant des moyens d'accouplement avec l'élément d'accouplement 88 de la seconde extrémité de l'élément d'actionnement 32, de sorte à entraîner en rotation ledit élément d'actionnement ; et un dispositif d'emboîtement élastique sur la collerette 89, de sorte à maintenir axialement la fixation 10 assemblée audit nez de pose.

Plus précisément, le nez de pose 202 s'étend selon un axe de pose 203, confondu sur la figure 9 avec l'axe principal 20 de la fixation 10. Le nez de pose 202 comprend un support tubulaire 204. A l'intérieur dudit support tubulaire, ledit nez de pose comprend également : une cage à galets 206, une couronne 208, une clé rotative 210, une pluralité de griffes de maintien 212 et une tige d'éjection 214.

Une première extrémité axiale du support tubulaire 204, dite extrémité avant, comporte une ouverture frontale 216. Une seconde extrémité axiale (non représentée) dudit support tubulaire 204 est apte à être reliée à un automate de pose (non représenté). La cage à galets 206 est adjacente axialement à l'ouverture frontale 216 et comporte notamment une pluralité de galets 217, s'étendant selon l'axe de pose 203 et disposés autour dudit axe. Ladite cage à galets 206, par exemple analogue au dispositif décrit dans le document EP2999571, est destinée à bloquer en rotation le corps 22 de la fixation 10, qui présente une surface externe cylindrique de révolution.

La couronne 208 est adjacente axialement à la cage à galets 206, à l'opposé de l'ouverture frontale 216. La couronne 208 forme une saillie radiale interne dans le support tubulaire 204.

La clé rotative 210 est disposée à l'intérieur dudit support tubulaire, à l'opposé de l'ouverture frontale 216 par rapport à la couronne 208. La clé rotative 210 a également une forme tubulaire, disposée selon l'axe de pose 203.

Une première extrémité axiale de ladite clé, dite extrémité avant, comporte une tête d'assemblage 218. Ladite tête d'assemblage comporte une empreinte 220, apte à s'assembler avec la surface latérale d'assemblage 88 du tirant 32 de la fixation 10. Une seconde extrémité axiale (non représentée) de ladite clé est apte à être reliée à un dispositif d'entraînement en rotation de l'automate de pose (non représenté).

La clé rotative 210 est mobile axialement par rapport au support tubulaire 204. Plus précisément, ladite clé comporte un ressort 222 de compression, qui exerce sur la tête d'assemblage 218 un effort axial orienté vers l'ouverture frontale 216.

Les griffes de maintien 212 s'étendent sensiblement selon l'axe de pose 203 et sont disposées autour de la clé rotative 210. De préférence, les griffes de maintien 212 sont au nombre de trois ou quatre.

Une première extrémité axiale de chaque griffe de maintien 212 forme un crochet 224 en saillie radiale vers l'intérieur. Les crochets 224 sont disposés axialement entre la couronne 208 et la tête d'assemblage 218 de la clé rotative 210.

Une deuxième extrémité axiale (non représentée) de chaque griffe de maintien 212 est fixée au support tubulaire 204. Les griffes de maintien sont flexibles, les crochets 224 pouvant s'écarter et se rapprocher radialement les uns des autres.

La tige d'éjection 214 est disposée selon l'axe de pose 203 à l'intérieur de la clé rotative 210. La tige d'éjection 214 comporte une surface d'appui frontale 226, orientée vers l'ouverture frontale 216 du support tubulaire 204. La tige d'éjection 214 est mobile en translation axiale par rapport audit support tubulaire.

Un procédé d'installation de la fixation 10, 110 dans les structures 12, 112, pour former l'assemblage 13, 113, va maintenant être décrit.

Au début du procédé d'installation, la fixation 10, 110 est dans une première configuration, dite configuration libre, représentée respectivement aux figures 1-2 pour la fixation 10 et 5-6 pour la fixation 110. Dans la configuration libre, les rondelles formant le ressort 34 de la fixation 10 ne sont pas comprimées. Dans le deuxième mode de réalisation des figures 5 à 8, le ressort 134 de la fixation 110 en configuration libre est dans un état de compression partielle ; ledit ressort maintient la goupille 28 en butée contre la surface arrière 147 de la couronne interne 146 du corps 122.

Par ailleurs, dans la configuration libre, le tirant 32, 132 forme une saillie axiale de longueur maximale selon l'axe principal 20, par rapport à l'extrémité arrière du corps 22, 122. L'épaulement 85 dudit tirant vient en butée contre la paroi arrière 45 de la cavité interne 38, 138.

En outre, dans la configuration libre, l'épaulement 66 de la tige creuse 30, 130 vient en butée contre la paroi avant 43 de la cavité interne 38, 138. La goupille 28 est proche de la seconde extrémité 74 des fentes latérales 70, 170 de ladite tige creuse 30, 130. Les pinces élastiques 24 forment une saillie axiale de longueur maximale selon l'axe principal 20, par rapport à la face d'appui 40 du corps 22, 122. L'extrémité avant 58 de l'écarteur 26 est en retrait par rapport aux becs d'accrochage 56 desdites pinces. Lesdits becs 56 sont ainsi au contact les uns des autres, formant un diamètre minimal perpendiculairement à l'axe principal 20.

Au cours d'une première phase du procédé d'installation, la fixation 10, 110 en configuration libre est assemblé à un automate (non représenté) équipé d'un outil de pose tel que le nez de pose 202 de la figure 9. La première phase va être décrite ci-après pour la fixation 10 du premier mode de réalisation :
Au début de la première phase du procédé d'installation, la tige d'éjection 214 du nez de pose 202 est dans une configuration rétractée, la surface d'appui frontale 226 étant en arrière par rapports aux crochets 224 des griffes 212. La fixation 10 est insérée dans l'ouverture frontale 216 du support tubulaire 204 du nez de pose, par l'extrémité arrière du tirant 32. Le déplacement axial dudit tirant 32 conduit les griffes de maintien 212 à s'écarter radialement autour de la surface latérale d'assemblage 88. Ladite surface latérale d'assemblage vient s'assembler avec l'empreinte 220 de la clé rotative 210, jusqu'à la mise en butée axiale du corps 22 contre la couronne 208. La collerette 89 vient également en butée axiale contre la tête d'assemblage 218. Par ailleurs, les crochets 224, ayant franchi ladite collerette 89, se rapprochent les uns des autres, les griffes 212 s'emboîtant élastiquement sur la collerette. Le tirant 32 est ainsi maintenu axialement entre la tête d'assemblage 218 et les crochets 224. La fixation 10 peut alors être déplacée par l'automate de pose sans tomber.

Au cours d'une deuxième phase du procédé d'installation, la fixation 10, 110 est assemblée aux structures 12, 112. La deuxième phase est décrite ci-après pour les deux modes de réalisation :
Dans une première étape du procédé d'installation, les pinces élastiques 24 sont introduites dans l'alésage 18 des structures 12, 112, depuis la première face 14. Puis, la face d'appui 40 du corps 22, 122 vient au contact de ladite première face 14. Les becs d'accrochage 56 sont alors en saillie axiale par rapport à l'alésage 18 et à la deuxième face 16 des structures 12, 112.

Dans une deuxième étape, le corps 22, 122 est bloqué en rotation par rapport aux structures 12, 112. Dans le cas de la fixation 10, ce blocage est assuré par la cage à galets 206 du nez de pose 202.

De plus, l'outil de pose, couplé à la surface d'assemblage 88 du tirant 32, 132, imprime audit tirant un mouvement de rotation autour de l'axe principal 20. Dans le cas de la fixation 10, la rotation est imprimée par la clé rotative 210.

Sous l'action dudit mouvement de rotation, la coopération du taraudage 84 du tirant 32, 132 avec le filetage 67 de la tige creuse 30, 130 entraîne ladite tige creuse et les pinces élastiques 24 en déplacement axial vers l'extrémité arrière du corps 22, 122. La goupille 28 étant maintenue fixe par rapport au corps 22, 122, ladite goupille coulisse dans les fentes latérales 70, 170 de la tige creuse 30, 130, en direction de la première extrémité 72.

De même, l'écarteur 26 étant maintenu fixe par rapport au corps 22, 122 par la goupille 28, le mouvement de rotation du tirant 32, 132 conduit les becs d'accrochage 56 à s'approcher de l'extrémité avant 58 dudit écarteur. Lorsque lesdits becs 56 arrivent axialement au niveau de ladite extrémité avant 58, les pinces élastiques 24 se déforment et les becs d'accrochage 56 s'écartent les uns des autres.

Les becs d'accrochage 56 offrent ainsi une prise avec la deuxième surface 16 des structures 12, 112, au bord de l'alésage 18. Cette configuration de la fixation 10, 110, dite configuration intermédiaire, correspond à un assemblage à des structures d'épaisseur Pₘₐₓ, comme représenté aux figures 7 et 8 pour la fixation 110. La figure 4 montre également les pinces élastiques 24, l'écarteur 26, la goupille 28 et l'élément de liaison 30 de la fixation 10 dans la configuration intermédiaire correspondant à une épaisseur Pₘₐₓ.

La description ci-après concerne spécifiquement la fixation 10 du premier mode de réalisation des figures 1 à 4. Comme visible sur la figure 4, dans la configuration intermédiaire, la goupille 28 de la fixation 10 est sensiblement à égale distance des première 72 et seconde 74 extrémités des fentes latérales 70 de la tige creuse 30.

Dans le cas où les structures 12 à assembler sont d'épaisseur inférieure à Pₘₐₓ, le mouvement de rotation du tirant 32 est poursuivi à partir de la configuration intermédiaire. La tige creuse 30 poursuit son déplacement vers l'arrière du corps 22 jusqu'à ce que les becs d'accrochage 56 entrent en contact avec la deuxième face 16 des structures 12.

La configuration de la figure 3, dite configuration minimale, correspond à un assemblage de la fixation 10 à des structures 12 d'épaisseur Pₘᵢₙ. Cette configuration minimale correspond à un jeu minimal entre la goupille 28 et la première extrémité 72 des fentes latérales 70 de la tige creuse 30.

Quelle que soit l'épaisseur des structures 12, après l'accrochage des becs 56 contre la deuxième face 16, la poursuite du mouvement de rotation du tirant 32 permet de comprimer les rondelles 34 entre la goupille 28 et ledit tirant 32. Cette compression permet d'appliquer une tension dans la fixation 10, une telle tension étant par exemple paramétrée au niveau du nez de pose 202. Il est donc nécessaire de maintenir un jeu, même faible, entre la goupille 28 et la première extrémité 72 des fentes latérales 70.

La description ci-après concerne spécifiquement la fixation 110 du deuxième mode de réalisation des figures 5 à 8. Comme évoqué précédemment, la fixation 110 présente une faible longueur selon l'axe principal 20. En particulier, une longueur des fentes latérales 170 est inférieure à la course de la tige creuse 130 dans le corps 122 entre la configuration libre des figures 5 et 6 et la configuration intermédiaire des figures 7 et 8. Cette faible longueur des fentes latérales 170 permet d'utiliser une tige creuse 130 particulièrement courte.

En conséquence, lors de la rotation du tirant 132 à partir de la configuration libre des figures 5 et 6, l'entrée en contact de la goupille 28 avec la première extrémité 72 des fentes latérales 170 est sensiblement simultanée à l'alignement des becs d'accrochage 56 avec la première extrémité 58 de l'écarteur 26. L'ensemble écarteur 26 / goupille 28 et l'ensemble pinces élastiques 24 / tige creuse 130 sont alors dans la configuration visible à la figure 8.

La poursuite de la rotation du tirant 132 entraîne conjointement vers l'arrière du corps 122 la tige creuse 130, les pinces élastiques 24, la goupille 28 et l'écarteur 26. La goupille 28 coulisse dans les encoches latérales 180 du manchon 136, en comprimant le ressort hélicoïdal 134.

Comme visible sur la figure 7, dans la configuration intermédiaire correspondant à des structures 112 d'épaisseur Pₘₐₓ, la goupille 28 est légèrement écartée de la butée axiale 147, ce qui permet au ressort 134 d'appliquer une tension dans la fixation 110.

Selon l'épaisseur des structures 112 à assembler, la rotation du tirant 132 peut être poursuivie jusqu'à une compression maximale du ressort 134. La fixation 110 est alors dans la configuration minimale, correspondant à des structures d'épaisseur Pₘᵢₙ. Dans la configuration minimale, la goupille 28 est proche de la seconde extrémité 182 des encoches latérales 180 du manchon 136.

Selon des modes de réalisation non représentés de la fixation, la goupille 28 insérée dans le trou transversal 62 de l'écarteur 26 est remplacée par une butée solidaire dudit écarteur, ladite butée étant apte à coulisser dans les fentes latérales de l'élément de liaison.

Au cours d'une troisième phase du procédé d'installation, la fixation 10, 110 assemblée aux structures 12, 112 est dissociée de l'outil de pose. La troisième phase va être décrite ci-après pour la fixation 10 du premier mode de réalisation :
Comme représenté sur la figure 9, la tige d'éjection 214 est déplacée axialement vers l'avant, la surface d'appui frontale 226 venant en butée axiale contre le tirant 32. La fixation 10 est ainsi poussée vers l'extérieur du support tubulaire 204. Sous l'action de ladite poussée axiale, les griffes de maintien 212 s'écartent les unes des autres, libérant la collerette 89.

Après l'installation décrite ci-dessus de la fixation 10, 110 dans des structures 12, 112, un procédé de démontage de l'assemblage 13, 113 ainsi formé est réalisé en faisant tourner le tirant 32, 132 en sens inverse, de sorte à remettre la fixation 10, 110 en configuration libre. Ladite fixation 10, 110 peut alors être dissociée des structures 12, 112 et réutilisée.

La présence du manchon 136 dans la fixation 110 du deuxième mode de réalisation permet de limiter la longueur totale de ladite fixation selon l'axe principal 20, sans rétrécir la gamme Pₘᵢₙ-Pₘₐₓ d'épaisseurs de structures 112 assemblables grâce à ladite fixation 110.

Par ailleurs, dans la configuration minimale de la fixation 10 du premier mode de réalisation, la première extrémité 58 de l'écarteur 26 forme une saillie par rapport aux becs d'accrochage 56, comme visible sur la figure 3. En revanche, dans la configuration minimale de la fixation 110 du deuxième mode de réalisation, la première extrémité 58 de l'écarteur 26 est alignée avec lesdits becs d'accrochage 56, comme dans la configuration intermédiaire des figures 7 et 8. Le deuxième mode de réalisation des figures 5 à 8 permet donc de réaliser un assemblage 113 avec un faible encombrement du côté de la deuxième face 16 des structures 112.

Dans les modes de réalisation des figures 1-4 et 5-8, la fixation 10, 110 est démontable de manière à changer l'un de ses éléments, si ce dernier est détérioré par des utilisations précédentes. En particulier, l'ensemble pinces élastiques 24/tige creuse, l'écarteur 26, la goupille 28 et éventuellement le bouchon 68 sont susceptibles d'être changés.

Un procédé de démontage de la fixation 10 des figures 1 à 4 est par exemple décrit ci-après : la fixation 10 étant dans la configuration libre des figures 1 et 2, la goupille 28 est extraite du reste de la fixation en enfonçant un outil pointu dans les ouvertures latérales 48 du corps 22. Le capuchon 52 est ensuite démonté et les pinces 24 et l'écarteur 26 sont extraits par l'extrémité avant du corps 22.

Un procédé de démontage de la fixation 110 des figures 5-8 est par exemple décrit ci-après : la fixation 10 étant dans la configuration libre des figures 5 et 6, la goupille 28 est extraite du corps 122 comme décrit précédemment. Puis le tirant 132 est mis en rotation de sorte à visser la tige creuse 130 jusqu'à la faire émerger de la seconde extrémité dudit tirant. L'ensemble pinces élastiques 24/tige creuse 130 est ensuite dissocié dudit tirant, puis le bouchon 68 et l'écarteur 26 en sont extraits au moyen d'un outil.

## Revendications

1. Fixation (10, 110) pour l'assemblage temporaire d'au moins deux structures préalablement percées, ladite fixation comprenant :
- un corps (22, 122) creux, s'étendant selon un axe principal (20), une première extrémité dudit corps comprenant une face d'appui (40) sensiblement perpendiculaire audit axe principal ;
- une pluralité de pinces élastiques (24) mobiles par rapport au corps (22, 122) et s'étendant sensiblement parallèlement à l'axe principal,
une première extrémité de chaque pince élastique comprenant un bec d'accrochage (56), lesdits becs d'accrochage formant saillie par rapport à la face d'appui (40) du corps ;
- un écarteur (26) s'étendant selon l'axe principal, une première extrémité (58) dudit écarteur formant saillie par rapport à la face d'appui (40) du corps, la pluralité de pinces élastiques (24) étant disposée autour de ladite première extrémité, une seconde extrémité (60) dudit écarteur étant disposée à l'intérieur du corps ;
- un élément de liaison (30, 130) mobile par rapport au corps et s'étendant selon l'axe principal à l'intérieur dudit corps, une première extrémité dudit élément de liaison étant solidaire d'une seconde extrémité de chaque pince élastique (24) ; et
- un élément d'actionnement (32, 132) relié à une seconde extrémité de l'élément de liaison par un mécanisme (67, 84) de type filetage/taraudage ;
la fixation étant **caractérisée en ce que** :
- l'élément de liaison (30, 130) est traversé par un orifice latéral (70) sensiblement disposé selon une direction transversale (Y) perpendiculaire à l'axe principal, ledit orifice latéral s'étendant axialement entre une première (72) et une seconde (74) extrémités fermées ; et
- la fixation comporte en outre une butée (28) s'étendant selon la direction transversale et solidaire de l'écarteur, ladite butée étant disposée dans l'orifice latéral (70) de l'élément de liaison, de sorte à coulisser entre les première (72) et seconde (74) extrémités axiales dudit orifice latéral.

2. Fixation selon la revendication 1, comprenant en outre un ressort (34, 134) de compression disposé à l'intérieur du corps (22, 122) autour de l'élément de liaison (30, 130), ledit ressort étant apte à se comprimer selon l'axe principal,
une extrémité (90) dudit ressort étant apte à entrer en contact avec la butée (28) de part et d'autre dudit élément de liaison.

3. Fixation selon l'une des revendications 1 ou 2, dans laquelle la seconde extrémité de l'élément de liaison comporte un filetage (67) et l'élément d'actionnement comporte un taraudage (84) coopérant avec ledit filetage.

4. Fixation selon l'une des revendications précédentes, dans laquelle la seconde extrémité (60) de l'écarteur est traversée par un trou transversal (62) disposé selon la direction transversale (Y), et la butée (28) est une goupille assemblée au trou transversal.

5. Fixation selon l'une des revendications précédentes, dans laquelle la pluralité de pinces élastiques (24) comprend au moins trois pinces élastiques et préférentiellement au moins quatre pinces élastiques.

6. Fixation (10) selon l'une des revendications précédentes, dans laquelle la butée (28) est fixe en translation selon l'axe principal (20) par rapport au corps (22).

7. Fixation (110) selon l'une des revendications 1 à 5, comprenant en outre un manchon (136) disposé à l'intérieur du corps autour de l'élément de liaison, ledit manchon étant fixe par rapport au corps (122),
une première extrémité dudit manchon comprenant deux encoches (180) s'étendant axialement et situées en vis-à-vis l'une de l'autre par rapport à l'axe principal (20),
la butée (28) traversant lesdites encoches et étant apte à coulisser dans lesdites encoches selon l'axe principal (20).

8. Fixation selon la revendication 7 prise en combinaison avec la revendication 2, dans laquelle le ressort de compression (134) est disposé autour du manchon (136).

9. Fixation selon l'une des revendications précédentes, dans laquelle une première extrémité de l'élément d'actionnement (32, 132) est disposée à l'intérieur du corps et une seconde extrémité dudit élément d'actionnement forme une saillie par rapport à une seconde extrémité dudit corps.

10. Fixation selon la revendication 9, dans laquelle la seconde extrémité de l'élément d'actionnement (32, 132) comporte un élément (88) d'accouplement avec un outil d'installation rotatif.

11. Fixation (10) selon la revendication 10, dans laquelle la seconde extrémité de l'élément d'actionnement (32) comporte en outre une collerette (89) formant une saillie radiale externe.

12. Assemblage (13, 113) comprenant :
- des structures (12, 112) à assembler, comprenant une première (14) et une seconde (16) faces opposées, ainsi qu'un alésage (18) débouchant sur chacune desdites première et seconde faces ; et
- une fixation selon l'une des revendications 1 à 11, la pluralité de pinces élastiques (24) étant disposée dans l'alésage, la face d'appui (40) du corps (12, 112) et les becs d'accrochage (56) venant au contact respectivement de la première face (14) et de la seconde face (16), le ressort (34, 134) exerçant une tension tendant à rapprocher ladite face d'appui et lesdits becs d'accrochage selon l'axe principal (20).

## Patentansprüche

1. Befestigung (10, 110) zur vorübergehenden Verbindung von mindestens zwei zuvor durchbohrten Strukturen, wobei die Befestigung Folgendes umfasst:
- einen hohlen Körper (22, 122), der sich entlang einer Hauptachse (20) erstreckt, wobei ein erstes Ende des Körpers eine Auflagefläche (40) umfasst, die im Wesentlichen senkrecht zur Hauptachse verläuft;
- eine Vielzahl von elastischen Klammern (24), die in Bezug auf den Körper (22, 122) beweglich sind und sich im Wesentlichen parallel zur Hauptachse erstrecken,
ein erstes Ende jeder elastischen Klammer eine Einhaknase (56) umfasst, wobei die Einhaknasen von der Auflagefläche (40) des Körpers vorstehen;
- einen Abstandshalter (26), der sich entlang der Hauptachse erstreckt, wobei ein erstes Ende (58) des Abstandshalters von der Auflagefläche (40) des Körpers vorsteht, wobei die Mehrzahl der elastischen Klammern (24) um das erste Ende herum angeordnet ist, wobei ein zweites Ende (60) des Abstandshalters im Inneren des Körpers angeordnet ist;
- ein Verbindungselement (30, 130), das in Bezug auf den Körper beweglich ist und sich entlang der Hauptachse im Inneren des Körpers erstreckt, wobei ein erstes Ende des Verbindungselements fest mit einem zweiten Ende jeder elastischen Klammer (24) verbunden ist; und
- ein Betätigungselement (32, 132), das mit einem zweiten Ende des Verbindungselements über einen Mechanismus (67, 84) vom Typ Gewinde/Innengewinde verbunden ist;
wobei die Befestigung **dadurch gekennzeichnet ist, dass**:
- das Verbindungselement (30, 130) von einer seitlichen Öffnung (70) durchdrungen ist, die im Wesentlichen in einer Querrichtung (Y) senkrecht zur Hauptachse angeordnet ist, wobei sich die seitliche Öffnung axial zwischen einem ersten (72) und einem zweiten (74) geschlossenen Ende erstreckt; und
- die Befestigung außerdem einen Anschlag (28) umfasst, der sich in Querrichtung erstreckt und fest mit dem Abstandhalter verbunden ist, wobei der Anschlag in der Seitenöffnung (70) des Verbindungselements so angeordnet ist, dass er zwischen dem ersten (72) und dem zweiten (74) axialen Ende der Seitenöffnung gleitet.

2. Befestigung nach Anspruch 1, die außerdem eine Druckfeder (34, 134) umfasst, die im Inneren des Körpers (22, 122) um das Verbindungselement (30, 130) herum angeordnet ist, wobei die Feder in der Lage ist, sich entlang der Hauptachse zusammenzudrücken,
wobei ein Ende (90) der Feder geeignet ist, den Anschlag (28) auf beiden Seiten des Verbindungselements zu berühren.

3. Befestigung nach einem der Ansprüche 1 oder 2, wobei das zweite Ende des Verbindungselements ein Gewinde (67) aufweist und das Betätigungselement ein mit dem Gewinde zusammenwirkendes Innengewinde (84) aufweist.

4. Befestigung nach einem der vorhergehenden Ansprüche, wobei das zweite Ende (60) des Abstandshalters von einem Querloch (62) durchsetzt ist, das in Querrichtung (Y) angeordnet ist, und der Anschlag (28) ein Stift ist, der mit dem Querloch verbunden ist.

5. Befestigung nach einem der vorhergehenden Ansprüche, wobei die Vielzahl von elastischen Klammern (24) mindestens drei elastische Klammern und vorzugsweise mindestens vier elastische Klammern umfasst.

6. Befestigung (10) nach einem der vorhergehenden Ansprüche, wobei der Anschlag (28) entlang der Hauptachse (20) in Bezug auf den Körper (22) translationsfest ist.

7. Befestigung (110) nach einem der Ansprüche 1 bis 5, ferner umfassend eine Hülse (136), die innerhalb des Körpers um das Verbindungselement herum angeordnet ist, wobei die Hülse in Bezug auf den Körper (122) feststehend ist,
ein erstes Ende der Hülse zwei sich axial erstreckende Kerben (180) aufweist, die einander in Bezug auf die Hauptachse (20) gegenüberliegen,
der Anschlag (28) durch die Kerben hindurchgeht und in den Kerben entlang der Hauptachse (20) gleiten kann.

8. Befestigung nach Anspruch 7 in Kombination mit Anspruch 2 genommen, wobei die Druckfeder (134) um die Hülse (136) herum angeordnet ist.

9. Befestigung nach einem der vorhergehenden Ansprüche, wobei ein erstes Ende des Betätigungselements (32, 132) im Inneren des Körpers angeordnet ist und ein zweites Ende des Betätigungselements einen Vorsprung in Bezug auf ein zweites Ende des Körpers bildet.

10. Befestigung nach Anspruch 9, wobei das zweite Ende des Betätigungselements (32, 132) ein Element (88) zur Kopplung mit einem drehbaren Installationswerkzeug aufweist.

11. Befestigung (10) nach Anspruch 10, wobei das zweite Ende des Betätigungselements (32) zusätzlich einen Flansch (89) aufweist, der einen radialen äußeren Vorsprung bildet.

12. Baugruppe (13, 113) mit:
- Strukturen (12, 112), die zusammengefügt werden sollen, mit einer ersten (14) und einer zweiten (16) gegenüberliegenden Seite sowie einer Bohrung (18), die in jede der ersten und zweiten Seite mündet; und
- eine Befestigung nach einem der Ansprüche 1 bis 11, wobei die Mehrzahl der elastischen Klammern (24) in der Bohrung angeordnet sind, die Auflagefläche (40) des Körpers (12, 112) und die Einhaknasen (56) jeweils mit der ersten Seite (14) bzw. der zweiten Seite (16) in Kontakt kommen, wobei die Feder (34, 134) eine Spannung ausübt, die dazu neigt, die Auflagefläche und die Einhaknasen entlang der Hauptachse (20) einander anzunähern.

## Claims

1. Fasteners (10, 110), for the temporary assembly of at least two previously drilled structures, said fastener comprising:
- a hollow body (22, 122), extending along a main axis (20), a first end of said body comprising a bearing surface (40) substantially perpendicular to said main axis;
- a plurality of elastic clips (24) moving in relation to the body (22, 122) and extending substantially parallel to the main axis,
a first end of each elastic clip comprising a hooking spur (56), the said hooking spurs forming a projection relative to the bearing surface (40) of the body;
- a spacer (26) extending along the main axis, with a first end (58) of the said spacer forming a projection relative to the bearing surface (40) of the body, the plurality of elastic clips (24) being positioned around the said first end, a second end (60) of said spacer positioned within the body;
- a connecting element (30, 130) mobile relative to the body and extending on the main axis within the body, a first end of the connecting element being secured to a second end of each elastic clip (24); and
- an actuating member (32, 132) connected to a second end of the connecting element by a threading/tapping mechanism (67, 84);
said fastener being characterized as such that:
- the connecting element (30, 130) is crossed by a lateral opening (70) substantially positioned in a transverse direction (Y) perpendicular to the main axis, the said lateral opening extending axially between a first (72) and a second (74) closed ends; and
- the fastener also comprises a stop (28) extending along the transverse direction and secured to the spacer, said stop being positioned in the lateral opening (70) of the connecting element, so as to slide between the first (72) and second (74) axial ends of said lateral opening.

2. Fastener as claimed in 1, also comprising of a spring (34, 134) of compression positioned within the body (22, 122) around the connecting element (30, 130), the said spring being capable of compressing on the main axis,
one end (90) of the said spring being able to make contact with the stop (28) on either side of the said connecting element.

3. Fastener as claimed in either 1 or 2, in which the second end of the connecting element comprises a thread (67) and the actuating element comprises a tapping (84) cooperating with said thread.

4. Fastener according to one of the preceding claims, in which the second end (60) of the spacer is crossed by a transverse hole (62) positioned in a transverse direction (Y), and the stop (28) is a pin assembled to the transverse hole.

5. Fastener according to one of the preceding claims, in which the plurality of elastic clips (24) includes at least three elastic clips and preferably at least four elastic clips.

6. Fastener (10) according to one of the previous claims, in which the stop (28) is secured in translation on the main axis (20) relative to the body (22).

7. Fastener (110) according to one of claims 1 to 5, also including a sleeve (136) positioned inside the body around the connecting element, the said sleeve being fixed relative to the body (122),
a first end of said sleeve comprising two notches (180) extending axially and positioned opposite each other relative to the main axis (20),
the stop (28) passing through the said notches and being capable of sliding into the said notches on the main axis (20).

8. Fastener as claimed in 7, combined with claim 2, in which the compression spring (134) is positioned around the sleeve (136).

9. Fastener according to one of the previous claims, in which a fist end of the actuating element (32, 132) is positioned within the body and a second end of said actuating element forms a projection relative to a second end of the body.

10. Fastener as claimed in 9, in which the second end of the actuating element (32, 132) comprises a coupling element (88) with a rotary installation tool.

11. Fastener (10) as claimed in 10, in which the second end of the actuating element (32) also comprises a collar (89) forming an outer radial projection.

12. Assembly (13, 113) comprising:
- structures (12, 112) to be assembled, comprising a first (14) and a second (16) opposite faces, and a bore (18) leading to each of said first and second faces; and
- a fastener according to one of the claims 1 to 11, the plurality of elastic clips (24) being positioned in the bore, the bearing surface (40) of the body (12, 112) and the hooking spurs (56) coming into contact respectively with the first face (14) and the second face (16), the spring (34, 134) exerting a tension tending to bring said bearing surface and the hooking spurs together on the main axis (20).
